(19) Europäisches Patentamt
European Patent Office
Office européen des brevets

(11) **EP 0 912 010 B1**

(12) **EUROPÄISCHE PATENTSCHRIFT**

(45) Veröffentlichungstag und Bekanntmachung des Hinweises auf die Patenterteilung:
**31.12.2008 Patentblatt 2009/01**

(51) Int Cl.:
*H04L 7/00* *(2006.01)*

(21) Anmeldenummer: **97116754.9**

(22) Anmeldetag: **26.09.1997**

(54) **Abtastregelkreis für einen Empfänger von digital übertragenen Signalen**

Phase locked loop for a receiver of digitally transmitted signals

Boucle à verrouillage d'échantillonnage pour un récepteur de données transmises numériquement

(84) Benannte Vertragsstaaten:
**DE FR GB IT NL**

(43) Veröffentlichungstag der Anmeldung:
**28.04.1999 Patentblatt 1999/17**

(73) Patentinhaber: **Micronas GmbH**
**79108 Freiburg i. Br. (DE)**

(72) Erfinder: **Temerinac, Miodrag, Prof. Dr.-Ing.**
**79194 Gundelfingen (DE)**

(74) Vertreter: **Patentanwälte**
**Westphal, Mussgnug & Partner**
**Am Riettor 5**
**78048 Villingen-Schwenningen (DE)**

(56) Entgegenhaltungen:
EP-A- 0 080 332    EP-A- 0 355 587
EP-A- 0 649 233    DE-A- 4 308 000
US-A- 4 736 386    US-A- 4 759 036
US-A- 4 958 360    US-A- 5 671 257

- **TRÖNDLE K ET AL: "Kompensation des systematischen Jitters bei der Taktgewinnung aus Digitalsignalen" FREQUENZ, SEPT. 1981, WEST GERMANY, Bd. 35, Nr. 9, ISSN 0016-1136, Seiten 236-242, XP002054624**
- **JABLON N K ET AL: "TIMING RECOVERY FOR BLIND EQUALIZATION" PROCEEDINGS OF THE ASILOMAR CONFERENCE ON SIGNALS, SYSTEMS AND COMPUTERS, PACIFIC GROVE, OCT. 31 - NOV. 2, 1988 TWO VOLUMES BOUND AS ONE, Bd. 1 OF 2, 31.Oktober 1988, CHEN R R, Seiten 112-118, XP000130228**
- **GARDNER, F.M.: "INTERPOLATION IN DIGITAL MODEMS. PART I: FUNDAMENTALS" IEEE TRANSACTIONS ON COMMUNICATIONS, Bd. 41, Nr. 3, März 1993 (1993-03), Seiten 501-507, XP000372693 New York, US**

## Beschreibung

Die Erfindung betrifft einen Abtastregelkreis für einen Empfänger von digital übertragenen Signalen, die als Symbole mittels einer Quadraturmodulation übertragen sind. Derartige Übertragungsverfahren sind beispielsweise unter folgenden Kurzbezeichnungen bekannt: FSK (= Frequency Shift Keying), PSK (= Phase Shift Keying), BPSK (= Binary Phase Shift Keying), QPSK (= Quarternary Phase Shift Keying) und QAM (= Quadrature Amplitude Modulation). Die Empfängerschaltungen sind hierzu bekannt und haben in der Regel einen ähnlichen Funktionsaufbau. Ein wichtiger Bestandteil hierbei ist der analoge oder digitale Abtastregelkreis, der dafür sorgt, dass die Information der digital übertragenen Signale zum richtigen Zeitpunkt abgegriffen wird. Der optimale Abgriff dieser Signale ist zeitlich eng mit den Symbolen des übertragenen Datenstromes verknüpft und unabhängig davon ob auf der Empfängerseite die Verarbeitung analog oder digital erfolgt. Bei einer digitalen Verarbeitung muss die Digitalisierungsrate selbstverständlich mindestens so groß sein wie die Datenrate der übertragenen Symbole. In der Regel liegt die Digitalisierungsrate deutlich über diesem Wert, z. B. mindestens um eine Größenordnung, wobei die Digitalisierungsrate gegenüber der Symbolrate freilaufend oder verkoppelt sein kann.

In IEEE Transactions On Communications, Bd. COM-34, Nr. 5, Mai 1986, Seiten 423 bis 429 ist unter dem Titel: "A BPSK/QPSK Timing-Error Detector for Sampled Receivers" von Floyd M. Gardner ausführlich beschrieben, wie sich zeitliche Abtastfehler aus den jeweiligen Symbolen erkennen lassen. Zur Ausschaltung dieser zeitlichen Abtastfehler dient ein nicht näher beschriebener Abtastregelkreis, der einen Abweichungsdetektor und eine Korrekturschaltung enthält, die auf die Abtaststufe zurückgeführt ist.

Aus WO 96/11526 geht ein Abtastregelkreis für eine Empfangsschaltung von digital übertragenen Signalen hervor, bei der die Digitalisierung hinter dem Quadraturdemodulator mittels zwei Analog/Digital-Umsetzern erfolgt. Der Abtastregelkreis ändert hierbei die Frequenz und Phase des Digitalisierungstaktes, wodurch die Abtastzeitpunkte für die einzelnen Symbole optimal eingestellt werden.

Aus WO 96/17459 geht ein Abtastregelkreis für eine Empfangsschaltung von digital übertragenen Signalen hervor, bei der die Digitalisierung vor der Quadraturdemodulation stattfindet. Die Digitalisierungsrate ist unabhängig von der Rate und Phase der empfangenen Symbole. Bei diesem Ausführungsbeispiel wird der optimale Absatzzeitpunkt für das jeweilige Symbol durch eine digitale Interpolationsschaltung gebildet, die entsprechend dem angelsächsischen Sprachgebrauch als "digitaler Resampler" bezeichnet wird.

Aus US 5,671,257 ist ein Abtastregelkreis für eine Empfangsschaltung von mittels Quadraturmodulation digital übertragenen Signalen offenbart. Die Frequenz eines die Abtastfrequenz bereitstellenden VCO wird abhängig von der Amplitude des quadraturmodulierten Signals korrigiert.

Aus US 4,759,036 ist eine ähnliche Schaltungsanordnung bekannt.

Als weiterer Stand der Technik wird der Artikel "Kompensation des systematischen Jitters bei der Taktgewinnung aus Digitalsignalen", von Tröndle et al. aus Frequenz, September 1981, Band 35 Nr. 9, Seiten 236 - 242 genannt.

Die bekannten Vorteile der digitalen Codierung und deren Übertragung mittels Symbolen bestehen darin, dass der Übertragungsweg und der Empfänger keinen zusätzlichen Stör- oder Rauschbeitrag zum Signalinhalt liefern, solange die Symbole auf der Empfängerseite sicher erkannt werden. Die Erkennbarkeit der einzelnen Symbole verschlechtert sich durch die überlagerten Stör- und Rauschsignale, die den ursprünglich punktförmigen Symbol-Ort im Zeigerdiagramm zu einem flächigen Phasen- und Amplitudenbereich verwischen. Wenn zusätzlich noch der Abtastzeitpunkt für die einzelnen Symbole vom Sollwert abweicht, dann ist bei ungünstigen Empfangsbedingungen die sichere Symbolerkennung nicht mehr gewährleistet.

Die geschilderten Nachteile beim Empfang oder bei der Auswertung von digital übertragenen Signalen beziehen sich auf Betriebszustände, die für die übliche Empfangschaltungen nicht mehr empfangswürdig sind. Von diesem Stand der Technik aus gesehen ist es Aufgabe der Erfindung, die Empfangsschaltung noch unempfindlicher gegen Störungen auszubilden.

Die Lösung dieser Aufgabe wird durch einen Abtastregelkreis mit den Merkmalen des Anspruchs 1 gelöst.

Die Lösung der Aufgabe beruht auf der Erkenntnis, dass bei stark gestörten Signalen die Nachführung des Abtastregelkreises bereits durch hin und wieder falsch erkannte Zeitabweichungswerte erheblich gestört wird, wodurch letztendlich die Anzahl der falsch erkannten Symbole erhöht wird. Bei stark gestörten Signalen reagiert der Abtastregelkreis viel zu empfindlich oder gar in falscher Richtung. Durch die Einführung eines Zuverlässigkeitswertes lässt sich der Abtastregelkreis adaptiv entsprechend dem vorhandenen Signalzustand steuern. Dies kann einfach dadurch erfolgen, dass bei geringen Zuverlässigkeitswerten der Abtastregelkreis insgesamt unempfindlicher wird bzw. blockiert und die falsch erkannten Zeitabweichungswerte dabei unterdrückt werden.

Besonders effektiv ist eine nichtlineare Verarbeitung, z. B. als Abschwächung oder Ausblendung, bei der die vermutlich falsch erkannten Zeitabweichungswerte den Abtastregelkreis nur ganz geringfügig oder gar nicht mehr beeinflussen. Es handelt sich also um eine individuelle Verarbeitung der einzelnen Zeitabweichungswerte, die von dem jeweiligen Zuverlässigkeitswert abhängig ist. Diese individuelle Abschwächung, Gewichtung oder Ausblendung hat den Vorteil, dass die einzelnen oder burstartig auftretenden Störungen den vorhandenen Regelzustand nicht stören. Und bei normalen Empfangsbedingungen wird weder die Regelsteilheit noch die Regelgeschwindigkeit des Abtastregelkreises durch diese Maßnahmen verändert.

Für die Bestimmung des Zuverlässigkeitswertes werden charakteristische Signalveränderungen ausgewertet, die sich aufgrund der Störungen ergeben. Wie bereits erwähnt, verbreitet sich mit zunehmender Störung der Aufenthaltsort im Zeigerdiagramm für das Symbol sowohl in der Phasen- als auch in der Amplitudenrichtung. Die gemessenen Phasen- und Amplitudenabweichungswerte vom Sollwert können ein Maß für die jeweilige Zuverlässigkeit darstellen. Je kleiner die Abweichungswerte sind, desto größer ist die Zuverlässigkeit und desto geringer ist die Wahrscheinlichkeit, dass der Zeitabweichungswert falsch bestimmt wird. Entsprechend lässt sich die Zuverlässigkeit aus den in Quadratur stehenden Signalkomponenten (im folgenden meist einfach als "Quadraturkomponenten" oder ähnlich bezeichnet) und ihren Abweichungen vom Sollwert bestimmen. Für eine Verbesserung der Empfangsbedingung bei schlechten Signalverhältnissen reicht es schon aus, wenn der Zuverlässigkeitswert relativ grob erfasst wird, beispielsweise durch die Vorgabe von Schwellwerten für die gemessenen Signalabweichungswerte.

Besonders einfach wird die Bestimmung des Zuverlässigkeitswertes, wenn die Übertragung der einzelne Symbole oder ihrer zugehörigen Inphasen- oder Quadraturphasenkomponenten (im folgenden auch als I-Komponente und Q-Komponente bezeichnet), nach dem Nyquistkriterium erfolgt, was in der Regel der Fall ist. Hierbei wird jedem zu übertragenden Symbol oder Bit eine Übertragungs funktion zugeordnet, die bei dem jeweiligen Symbolabtastzeitpunkt einen positiven oder negativen Signalwert aufweist, bei allen anderen ganzzahligen Vielfachwerten der Symbolperiode jedoch den Signalwert Null. Der Signalzustand in den zeitlichen Zwischenbereichen ist dabei von Null verschieden, die Umhüllende soll im Abstand einiger Symbolperioden jedoch möglichst rasch gegen Null gehen. Durch diese Bedingungen werden störende Interferenzen zwischen Nachbarsymbolen verhindert, sofern die Abtastung exakt an den vorgesehenen Symbolabtastzeitpunkten erfolgt. Mit dem Abweichungsdetektor wird der Zeitabweichungswert zwischen dem aktuellen Symbolabtastzeitpunkt und dem optimalen Symbolabtastzeitpunkt bestimmt.

Eine Verwendung des Nyquistkriteriums zur Bestimmung des Zuverlässigkeitswertes beruht auf dem zeitlichen Verlauf der Übertragungsfunktion. Es werden dabei nur diejenigen Zeitabweichungswerte für den Abtastregelkreis zugelassen, die mit einem Vorzeichenwechsel der jeweiligen I-, oder Q-Komponente verknüpft sind. Denn nur aus der zeitabhängigen Signaländerung der Abtastwerte bei einem Vorzeichenwechsel lässt sich der Zeitabweichungswert vernünftig bestimmen. Vermeintliche Zeitabweichungswerte, die auf Signaldifferenzen beruhen, die lediglich durch gestörte Signale und nicht durch einen echten Vorzeichenwechsel bedingt sind, werden auf diese Weise unterdrückt. Eine einfache Schaltung zur Bestimmung des Vorzeichenwechsels der jeweils abgegriffenen I- oder Q-Komponente besteht aus einem Exklusiv-Oder-Gatter, deren ersten bzw. zweiten Eingang das Vorzeichenbit direkt bzw. um einen Symboltakt verzögert zugeführt sind.

Eine weitere Verbesserung wird dadurch erreicht, dass zur Bildung des Zuverlässigkeitswertes in einer Speichereinrichtung eine Signalfolge gespeichert wird, die entweder Quadraturkomponenten oder erkannte Symbolkomponenten enthält.

Wenn sich das mitlaufende Fensterintervall über den Zeitbereich von mindestens vier aufeinanderfolgende Symbolen oder den zugehörigen realen Abtastwerten erstreckt, dann ist durch eine einfache logische Verknüpfung ein sehr effektiver Zuverlässigkeitswert bestimmbar. Die logische Verknüpfung schließt dabei mit ein, dass der Zuverlässigkeitswert nur dann als ausreichend gilt, wenn der Zeitabweichungswert zwingend einem Vorzeichenwechsel der gespeicherten Signalfolge zeitlich zugeordnet ist.

Ein wesentliches Kriterium für den Zuverlässigkeitswert bezieht sich auf die Bestimmung einer Referenz-Signalamplitude. Diese dient als Bezugsgröße für den Signalwert im Vorzeichenwechselbereich. Aus der zeitabhängigen Änderung des Signalwertes im Vergleich zur Referenz-Signalamplitude kann der jeweilige Zeitabweichungswert bestimmt werden, im einfachsten Fall näherungsweise durch eine einfach lineare Beziehung. Der so ermittelte Zeitabweichungswert ist jedoch nur dann als zuverlässig anzusehen, wenn die gespeicherte Signalfolge mindestens an den zwei Abtastzeitpunkten logisch stabil ist, die der Bestimmung der Referenz-Signalamplitude dienen. Bei der angenommenen linearen Näherung ist es unerheblich, ob die Abtastwerte für die Referenz-Signalamplitude dem Vorzeichenwechsel vorausgehen oder nachfolgen. Dies hat lediglich einen Einfluss auf die Auswahl und mathematische Verknüpfung der jeweiligen Abtastwerte.

Wenn der Zuverlässigkeitswert einem digitalen Signal mit einem Bit entspricht, dann wird mittels einer vom Zuverlässigkeitswert abhängigen logischen Blockiereinrichtung, z. B. eine Torschaltung, die Übernahme des Zeitabweichungswertes in den Abtastregelkreis unterdrückt. Die Bildung des Zuverlässigkeitswertes aus der gespeicherten Signalfolge kann ohne weiteres auch mit einem analogen Abtastregelkreis kombiniert werden.

Durch geeignete Maßnahmen wird der Zeitkorrekturwert für den Abtastinterpolator in positiver und negativer Richtung auf eine halbe Abtastperiode begrenzt. Übersteigt der Zeitkorrekturwert diesen Grenzwert, dann wird die Zeitkorrektur auf den benachbarten, näher stehenden Abtastwert bezogen, wobei das Vorzeichen des Zeitkorrekturwertes wechselt. Bei einer rein digitalen Realisierung bezieht sich die Abtastperiode auf die realen Abtastwerte, die durch die Digitalisierung vorgegeben sind. Damit in einem realen Abtastintervall niemals zwei interpolierte Abtastwerte auftreten können, was zu einem Konflikt bei der eindeutigen Zuordnung zwischen den berechneten Zeitkorrekturwerten und den realen Abtastwerten führen würde, ist es sinnvoll, dass die Anzahl der durch die Digitalisierung vorgegebenen realen Abtastwerte größer ist als die Anzahl der interpolierten Abtastwerte. In diesem Fall wird jeweils dann ein realer Abtastwert übersprungen, wenn der Zeitkorrekturwert größer als die halbe Abtastperiode würde. Der Zeitkorrekturwert springt dabei wie bei einer Modulo-Funktion auf einen negativen Wert, der sich dann kontinuierlich wieder dem positiven Grenzwert nähert. Dadurch wird eine eindeutige Zuordnung zwischen berechneten Zeitkorrekturwerten und den realen Abtastwerten hergestellt. Der Unterschied der Digitalisierungsrate zur Interpolationsrate muss dabei größer als alle im ungünstigsten Fall auftretenden Toleranzen der Symbol- und Taktfrequenzen auf der Sender- und Empfängerseite sein.

Die Erfindung und vorteilhafte Ausgestaltungen werden nun anhand der Figuren der Zeichnung näher erläutert:

Fig. 1      zeigt schematisch als Blockschaltbild einen Abtastre- gelkreis nach der Erfindung,

Fig. 2      zeigt im Zeitdiagramm eine Quadratursignalkomponente,

Fig. 3      zeigt schematisch ein Amplituden/Phasen-Diagramm,

Fig. 4      zeigt drei Übertragungsfunktionen,

Fig. 5      zeigt den schematisierten Verlauf einer Quadratursig- nalkomponente,

Fig. 6      zeigt hierzu eine lineare Berechnung des Zeitabwei- chungswertes,

Fig. 7      zeigt schematisch vier gültige Zustände für den Zu- verlässigkeitswert,

Fig. 8      zeigt schematisch vier andere gültige Zustände für den Zuverlässigkeitswert,

Fig. 9      zeigt das Blockschaltbild zur Bildung eines Zeitkor- rektursignals und

Fig. 10    zeigt das Zeitkorrektursignal bei einem freilaufenden Digitalisierungstakt.

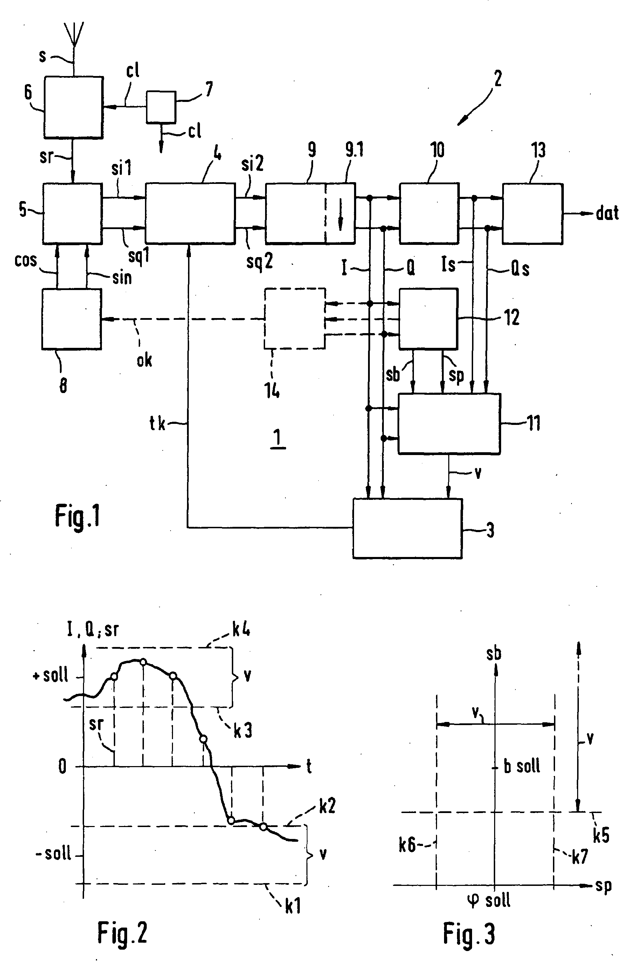

Fig. 1 zeigt als Ausführungsbeispiel für die Erfindung einen Abtastregelkreis 1, der in eine Empfangsschaltung 2 für digital übertragene Signale s eingebunden ist. Mit einem Abweichungsdetektor 3 wird aus Signalen der Empfangsschaltung, insbesondere den Quadraturkomponenten I, Q, ein Zeitabweichungswert td gebildet, aus dem im Abweichungsdetektor über Filter ein Zeitkorrekturwert tk gebildet wird, der einen im Signalpfad der Empfangsschaltung 2 liegenden Abtastinterpolator 4 steuert. Eingangsseitig ist der Abtastinterpolator mit einem Quadraturkomponentenpaar si1, sq1 aus einem Quadraturdemodulator 5 gespeist, der ein quadraturmoduliertes Eingangssignal sr in das Basisband oder eine tiefe Frequenzlage umsetzt. In dem Ausführungsbeispiel der Empfangsschaltung 2 von Fig. 1 ist das dem Quadraturdemodulator 5 zugeführte Signal sr ein digitalisiertes Signal, das in einer vorausgehende Signalquelle 6 entsprechend einem Systemtakt cl digitalisiert ist, der innerhalb oder außerhalb der Empfangsschaltung 2 durch einen Systemtaktgeber 7 gebildet ist. Bei der Quelle 6 kann es sich um einen Tuner handeln, der das digital modulierte Signal s über eine Antenne empfängt. Die Quelle 6 kann jedoch auch eine Speichereinrichtung oder eine Kabelstation oder eine andere Einrichtung sein, sie ist dann entsprechend angepasst. Bei der digitalen Realisierung der Empfangsschaltung 2 von Fig. 1 findet sowohl die Ouadraturmischung als auch die Interpolation im Abtastinterpolator 4 ebenfalls mit dem Systemtakt cl statt. Zur digitalen Quadraturmischung sind dem Quadraturdemodulator 5 aus einem Oszillator 8 digitale Mischungssignale zugeführt, deren digitalen Werte einem Cosinus-Signal cos und einem Sinus-Signal sin entsprechen.

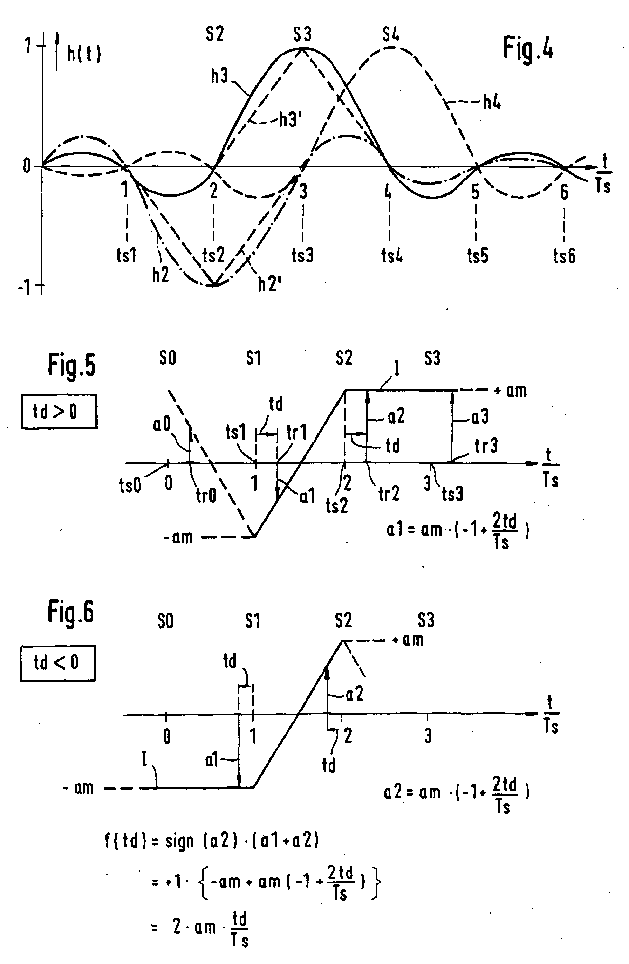

Der Abtastinterpolator 4 erzeugt ein interpoliertes Quadraturkomponentenpaar si2, sq2, das einem Nyquist- Empfängerfilter 9 zugeführt ist. Dieses Filter 9 wirkt mit einem nicht dargestellten Nyquist-Filter auf der Senderseite zusammen und bewirkt die bereits erwähnte Übertragungsfunktion, vgl. auch Fig. 4. An das Nyquist-Empfängerfilter 9 schließt sich in der Regel eine Dezimierungsstufe 9.1 an, in der die Verarbeitungsrate so weit wie möglich heruntergesetzt wird, möglichst auf die Symbolrate. Das Ausgangssignal des Nyquist-Empfängerfilters 9 oder der nachfolgenden Dezinierungsstufe 9.1 ist somit ebenfalls wieder ein Quadraturkomponentenpaar I, Q, das einer Symbolentscheidungsstufe 10, dem Abweichungsdetektor 3 und einer Bewertungseinrichtung 1 zugeführt ist, die aus diesen und/oder weiteren Signalen einen Zuverlässigkeitswert vermittelt.

Im Ausführungsbeispiel von Fig. 1 sind die Quadraturkomponenten I, Q ferner einem Koordinatenumsetzer 12 zugeführt, der aus den Quadraturkomponenten I, Q ein Komponentensignalpaar sb, sp mit polaren Koordinaten b, φ bildet und gegebenenfalls mindestens eines dieser Signale sb, sp der Bewertungseinrichtung 11 zuführt. Bei der Auswertung dieser Signale I, Q, sb, sp zur Bildung des Zuverlässigkeitswertes v ist das Vorzeichen und der Betrag wichtig, weil sich dann zuverlässige Abweichungen vom jeweiligen Sollwert durch die Vorgabe von Schaltschwellen k1 bis k7 auf einfache Weise bestimmen lassen.

Noch einfacher ist die Bestimmung des Zuverlässigkeitswertes v wenn hierfür Symbolkomponenten, nämlich die Ausgangssignale Qs, Is der Symbolentscheidungsstufe 10 in der Bewertungseinrichtung 11 verwendet werden. Diese Signale enthalten nur noch das Vorzeichen der jeweiligen Quadraturkomponente I, Q, wobei jeweils ein Symbolkomponentenpaar Is, Qs bei einer QPSK-Modulation eines von vier unterschiedlichen Symbolen definiert. Die Zerlegung der einzelnen Symbole in einen Ausgangsdatenstrom dat, mit der die ursprünglichen digitalen Signale s wieder rekonstruiert sind, erfolgt durch eine Ausgangsstufe 13. Die Symbolkomponenten Is, Qs sind eigentlich den optimalen Symbolabtastzeitpunkten ts0 usw. zugeordnet.

Die Auswertung der Symbolkomponenten Is, Qs in der Bewertungseinrichtung 11 erfolgt lediglich über die gespeicherte Vorzeichenfolge. Eine Auswertung über den Betrag, wie bei anderen Signalen, ist nicht erforderlich. Selbstverständlich kann der Zuverlässigkeitswert v auch durch eine Kombination sämtlicher Verfahren gebildet werden, indem jedes Bewertungsverfahren mindestens einen ausreichenden Zuverlässigkeitswert v bestimmt. Reicht einer der Zuverlässigkeitswerte nicht aus, dann ist der gemessene Zeitabweichungswert td fraglich und sollte nicht in den Abtastregelkreis 1 übernommen werden.

Der Vollständigkeit halber ist in der Empfangsschaltung 2 auch der Rückkopplungszweig für die richtige Trägerfrequenz im Quadraturdemodulator 5 angedeutet. Sie enthält eine Trägerregelstufe 14, die entweder mit den Quadraturkomponenten I, Q oder mit einem Ausgangssignal sb, sp des Koordinatenumsetzers 12 gespeist ist. Ein Oszillator-Steuersignal ok aus der Trägerregelstufe 14 steuert die Frequenz des Oszillators 8, der im Ausführungsbeispiel ein digitaler Oszillator ist, dessen Ausgangssignale cos, sin gegebenenfalls über eine gespeicherte Tabelle gebildet werden.

In Fig. 2 ist als Beispiel der zeitliche Verlauf einer Inphasenkomponente I oder einer Quadraturphasenkomponente Q im Bereich eines Vorzeichenwechsels dargestellt. Die zugehörigen digitalen Abtastwerte sind durch gestrichelte Linien und kleine Kreise dargestellt, dies könnten jedoch auch andere Abtastwerte sr der Empfangsschaltung 2 sein. Durch Rauschen und Störeinflüsse weichen die Quadraturkomponenten I, Q mehr oder weniger von dem positiven oder negativen Sollwert ab. Die zuverlässigen Signalbereiche, die den Zuverlässigkeitswert definieren, werden durch die Schwellwerte k1, k2 bzw. k3, k4 eingegrenzt. Kritisch sind insbesondere kleine Quadraturkomponenten I, Q, sodass den inneren Schwellwerten k2, k3 eine größe Bedeutung zukommt und die äußeren Schwellwerte 1, k4 gegebenenfalls sogar weggelassen werden können. Wenn die Quadraturkomponenten I, Q mittels des Koordinatenumsetzers 12 in polare Koordinaten b, $\varphi$ umgesetzt sind, dann liegt der jeweilige Signalwert als Betragswert sb und Phasenwert sp vor. Je größer der Rausch- oder Störanteil ist, desto größer ist die Abweichung vom Betragssollwert $b_{soll}$ und Phasensollwert $\varphi_{soll}$. Durch die Vergabe von Schwellwerten k6, k7 und k5 lassen sich auch hier auf einfache Weise die zuverlässigen von den unzuverlässigen Bereichen trennen, um den Zuverlässigkeitswert v zu bestimmen.

Die Schwellwerte in Fig. 2 und Fig. 3, die eine Ja/Nein-Entscheidung steuern, können selbstverständlich durch weitere Schwellwerte ergänzt werden, wodurch unterschiedliche Zuverlässigkeitsstufen zur Verfügung stehen und der jeweilige Zuverlässigkeitswert v eine Gewichtung ermöglicht.

In Fig. 4 sind die theoretische Übertragungsfunktionen h(t) für eine der Quadraturkomponenten I, Q von drei aufeinanderfolgenden Symbolen S2, S3, S4 dargestellt. Die erste Übertragungsfunktion h2 gehört zum Symbol S2, das zum Symbolabtastzeitpunkt ts2 den logischen Zustand "Null" darstellt. Die Übertragungsfunktion h3 des Symbols S3 zeigt zum Symbolabtastzeitpunkt ts3 den logischen Zustand "Eins". Schließlich zeigt zum Symbolabtastzeitpunkt ts4 die Übertragungsfunktion h4 des vierten Symbols S4 ebenfalls den logischen Zustand "Eins". Die einzelnen Übertragungsfunktionen h2 bis h4 entsprechen dabei dem Nyquist-Kriterium, das an den jeweiligen Symbolabtastzeitpunkten ts1 bis ts6 lediglich für eine einzige Übertragungfunktion h(t) die normierten Signalwerte +1 bzw. -1 zulässt, die den logischen Zuständen "Eins" bzw. "Null" zugeordnet sind. Alle anderen Übertragungsfunktionen h(t) gehen an den Symbolabtastzeitpunkten durch den Signalwert Null. Zwischen den Symbolabtastzeitpunkten ts1 bis ts6 liefern alle Übertragungsfunktionen h(t) einen Signalbeitrag, dessen Wert jedoch mit zunehmender Entfernung zum zugehörigen Symbolabtastzeitpunkt abnimmt.

Aus Fig. 4 ist ersichtlich, dass nur zu den Symbolabtastzeitpunkten die Information über das jeweilige Symbol ungestört von den Nachbarsymbolen ausgewertet werden kann. Je weiter der aktuelle Symbolabtastzeitpunkt von den benachbarten optimalen Symbolabtastzeitpunkten entfernt ist, desto größer ist die sogenannte Interferenz durch die vorhandenen Nachbarsymbole. Es wird darauf hingewiesen, dass unter aktuellem Symbolabtastzeitpunkt sowohl eine tatsächliche Abtastung verstanden werden kann als auch eine interpolierte Abtastung. Bei der interpolierten Abtastung liegt der Abtastwert lediglich als Rechengröße vor, die aus benachbarten tatsächlichen Abtastwerten si1, sq1 berechnet wird.

Zur Bestimmung des Zeitabweichungswertes td aus der I- und/oder Q-Komponente werden die in Fig. 4 dargestellten Übertragungsfunktionen h(t) durch einfach berechenbare Näherungsfunktionen ersetzt. Beispielsweise entspricht der Übertragungsfunktion h3 die Näherungsfunktion h3', die zwischen den Symbolabtastzeitpunkten ts2 und ts4 linear bis zum Wert +1 ansteigt und dann wieder linear abfällt. Außerhalb dieses Zeitbereiches hat die Übertragungsfunktion h3' überall den Wert "Null", auch zwischen den Symbolabtastzeitpunkten. Für den zu übertragenden logischen Zustand "Null" dient eine in negative Richtung gehende Näherungsfunktion, vgl. den Kurvenverlauf der Näherungsfunktion h2' gegenüber der Übertragungsfunktion h2. Außerhalb der Symbolabtastwerte ts1 bis ts3 hat auch die Näherungsfunktion h2' überall den Wert Null. Beim Symbolabtastpunkt ts2 wird der normierte Signalpegel -1 erreicht.

Die Berechnung des Zeitabweichungswertes td vereinfacht sich, wenn die einzelnen Quadraturkomponenten I, Q aus derartigen Näherungsfunktionen zusammengesetzt sind. Dies erfolgt beispielsweise in den nachfolgenden Figuren 5 und 6. Sie zeigen den näherungsweisen Verlauf einer der Quadraturkomponente I, Q beim Übergang von einem negativen Signalpegel -am auf einen positiven Signalpegel +am, die dem logischen "Null"- bzw. "Eins"-Zustand entsprechen. Der optimale Signalzustand der Symbole S0 bis S3 sollte bei den Symbolabtastzeitpunkten ts0 bis ts3 abgegriffen werden. Fällt die aktuelle Abtastung nicht mit den optimalen Symbolabtastzeitpunkten zusammen, dann weichen die gemessenen Signalamplituden a0 bis a3 von dem Maximalwert am ab, sofern der aktuelle Symbolabtastzeitpunkt in den Bereich eines Zustandswechsels fällt. Die Aktuellen Symbolabtastzeitpunkte sind in Fig. 5 mit tr0, tr1, und tr2 bezeichnet. Der besseren Übersicht wegen sind in der ähnlichen Fig. 6 die Bezeichnungen für die Abtastzeitpunkte weggelassen.

In Fig. 5 zeigt die Zeitachse t nach rechts. Die Verschiebung der aktuellen oder realen Symbolabtastzeitpunkte tr0 bis tr2 gegenüber den optimalen Symbolabtastzeitpunkten ts0 bis ts3 erfolgt nach rechts zu größeren Zeitwerten hin. Der Zeitabweichungswert td ist daher positiv. Ändert sich der Signalzustand zwischen zwei Symbolabtastzeitpunkten ts2, ts3 nicht, dann ändert sich auch nicht die dazwischen abgegriffene Signalamplitude a2. Eine derartige Signalamplitude a2 kann daher als Referenz für die Sollamplitude +am oder -am dienen. Durch die abschnittsweise Linearisierung der Übertragungsfunktion h(t) kann aus der gemessenen Signalamplitude a1 im Vergleich zur Referenz-Signalamplitude a2 und der bekannten Symbolperiode Ts der gesuchte Zeitabweichungswert td bestimmt werden. Es gilt hierbei folgende lineare Beziehung:

$$a1 = a2 - 2 \times a2 \times td/Ts = am \times (-1 + 2 \times td/Ts). \qquad (1)$$

Ein Vergleich der beiden gleich großen Signalamplituden a0, a1 liefert keine Aussage über den Zeitabweichungswert td, weil beide Signalamplituden einem Vorzeichenwechsel zugeordnet sind. Zuverlässig ist somit nur die Bestimmung des Zeitabweichungswertes td aus einem Vergleich der Signalamplituden a2 und a1. Diese sind aber mit den Zuständen der Symbole S1, S2, S3 verknüpft, während der Zustand des Symbols S0 ohne Bedeutung ist.

In Fig. 6 ist ein vergleichbarer Signalwechsel dargestellt, wobei der zugehörige Zeitabweichungswert td jedoch negativ ist. Durch die Verschiebung der aktuellen Abtastzeitpunkte tr0 bis tr3 in negativer Richtung ist eine Aussage über die Maximale Signalamplitude +am nur dann möglich, wenn die Signalamplitude a1 zwischen den optimalen Symbolabtastzeitpunkten ts0 und ts1 und somit auch zwischen den realen Abtastzeitpunkten tr0 und tr1 logisch stabil ist. Ein Vorzeichenwechsel darf also bei der Prüfung, ob die Signalamplitude als Referenz geeignet ist, zwischen den Signalamplituden a0 und a1 auf keinen Fall auftreten, während Betragsunterschiede vernachlässigt werden. Aus den gemessenen Signalamplituden a1, a2 und der Symbolabtastperiode Ts ergibt sich dann der gesuchte Zeitabweichungswert td nach folgender Gleichung:

$$a2 = -a1 + 2 \times a1 \times td/Ts = am \times (-1 + 2 \times td/Ts). \qquad (2)$$

Aus Fig. 6 ist ersichtlich, dass für negative Zeitabweichungswerte td der Signalverlauf zu den Symbolabtastzeitpunkten ts0, ts1 und ts2 gespeichert und ausgewertet werden muss, während der Zustand zum Symbolabtastzeitpunkt ts3 beliebig ist. Es ist daher sinnvoll in einer Speicherschaltung vier benachbarte Symbolkomponenten Is und/oder Qs abzuspeichern und je nach dem Vorzeichen des Zeitabweichungswertes die ersten drei oder die letzten drei gespeicherten Zustände für die Auswertung heranzuziehen. Passt die gespeicherte Signalfolge zum ermittelten Zeitabweichungswert, dann ist die Messung zuverlässig, in allen anderen Fällen ist sie unzuverlässig. Der Zuverlässigkeitswert v ist in diesem Fall einfaches Ja/Nein-Signal.

Die beiden Gleichungen (1) und (2) können leicht nach td aufgelöst werden. Die entsprechende Berechnung lässt sich in einer mitintegrierten Rechenschaltung oder mittels eines Unterprogramms leicht realisieren. Etwas störend ist hierbei, dass die beiden Berechnungen und die logische Überprüfung mit den vier gespeicherten Zuständen parallel ausgeführt werden muss. Die beiden unterschiedlichen Gleichungen können jedoch unter Verwendung der Vorzeichenfunktion sign(a2) der gemessenen Signalamplitude a2 in eine einzige Gleichung (3) überführt werden:

$$F(td) = sign\ (a2)\ x\ (a1 + a2) \tag{3}$$

$$= +1\ x\ (-am + am\ x\ (\ -1 + 2\ x\ td/Ts)) \tag{4}$$

$$= 2\ x\ am\ x\ td/Ts. \tag{5}$$

Die Auflösung der Gleichung (5) nach td liefert das richtige Ergebnis für den Zeitabweichungswert td.

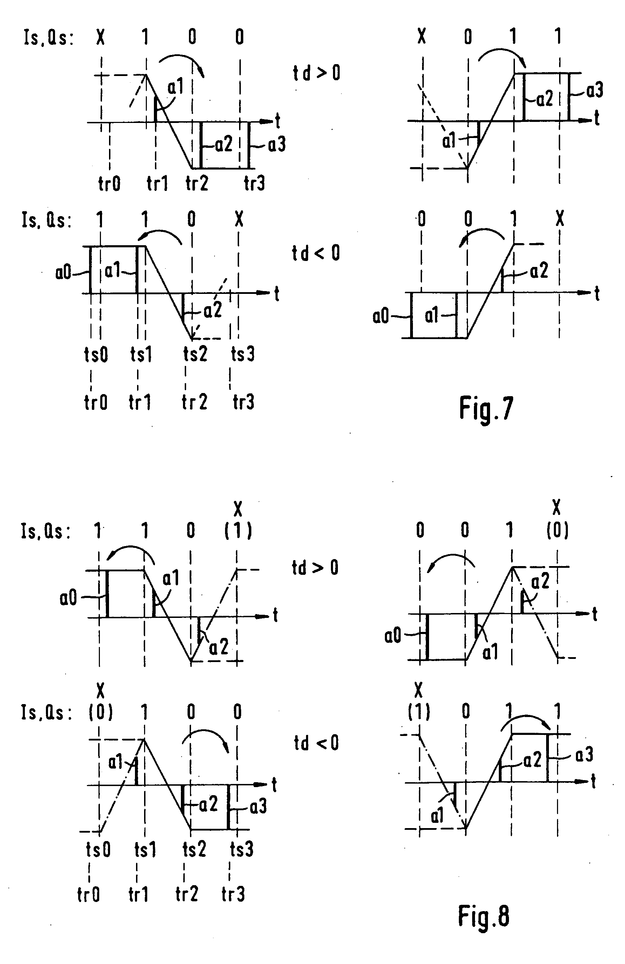

Es wird darauf hingewiesen, dass die rechten Seiten der Gleichungen (1) und (2) jeweils den Faktor "am" aufweisen und zueinander identisch sind, wobei der Faktor "am" dem vorzeichenlosen Betrag der Referenz-Signalamplitude entspricht. Ob dieser vorzeichenlose Wert "am" vor oder nach dem Vorzeichenwechsel abgegriffen wird, ist für die eigentliche Berechnung des resultierenden Zeitabweichungswertes td unerheblich. Die Gleichungen für die Bestimmung des Zeitabweichungswertes td aus zwei der gemessenen Signalamplituden a1, a2 sind gegebenenfalls anzupassen. In jedem Fall muss sichergestellt sein, dass die zugehörige Symbolkomponenten Is, Qs im Bestimmungsbereich der jeweiligen Referenz-Signalamplitude a0, a1, a2 oder a3 entsprechend den Darstellungen von Fig. 7 und Fig. 8 logisch stabil sind.

In Fig. 7 werden die vier in Gleichung (3) einfach zusammengefassten Zustände für einen gültigen Zuverlässigkeitswert v schematisch gezeigt. Zu den Symbolabtastzeitpunkten ts0 bis ts3 oder den zugehörigen Abtastzeitpunkten tr0 bis tr3 sind die logischen Zustände "Null" und "Eins" der jeweiligen Symbolkomponente Is oder Qs dargestellt. Das Symbol "X" bedeutet dabei, dass der zugehörige logische Zustand ohne Bedeutung ist, er nimmt an der logischen Bewertung nicht teil.

Die Auswerteschaltung stellt zunächst fest, dass sich die benachbarten Signalamplituden a1 und a2 im Vorzeichen unterscheiden und bestimmt aus der Signaldifferenz einen vorläufigen Zeitabweichungswert. Ob dieser Wert zuverlässig ist hängt davon ab, ob die angenommene Referenz-Signalamplitude - es ist der betragsmäßig größere von beiden Werten - tatsächlich eine solche ist. Dies ist nur durch einen Vorzeichenvergleich mit dem benachbarten aktuellen Abtastwert a0 oder a3 zu bestimmen. Ein Vorzeichenwechsel darf dabei nicht auftreten, weil dann der logische Zustand der Symbolkomponente Is, Qs in diesem Bereich sicher nicht stabil ist.

In den schematischen Darstellungen von Fig. 7 und Fig. 8 ist mittels eines gebogenen Pfeils angedeutet, welcher der beiden Abtastwerte a1, a2 zeitabhängig und welcher die Referenz-Signalamplitude ist. Die Pfeilspitze zeigt hierzu auf die Referenz-Signalamplitude, also den betragsmäßig größeren Wert, und der Schwanz des Pfeiles auf die von dem Zeitabweichungswert td abhängige Signalamplitude.

In den Beispielen von Fig. 8 findet in jedem Fall ein Vorzeichenwechsel zwischen den Abtastwerten a1 und a2 statt. Es ist jedoch möglich, dass keiner dieser beiden Abtastwerte als Referenz-Signalamplitude geeignet ist, weil beide Abtastwerte a1 und a2 jeweils einen Zustandswechsel der Symbolkomponente Is, Qs zugeordnet sind. Dies ist in den Beispielen von Fig. 8 durch den Signalverlauf (vergl. die strichpunktierte Linie) und die eingeklammerte Symbolkomponente (0) oder (1) angedeutet. Trotzdem kann ein gültiger Zeitabweichungswert td bestimmt werden, wenn als Referenz-Signalamplitude ein logisch stabiler Abtastwert in der Nachbarschaft zur Verfügung steht. Dies ist bei den in Fig. 8 angegebenen vier unterschiedlichen Symbolfolgen der Fall. Als Referenz-Signalamplitude wird hier der zeitlich zwischen logisch stabilen Zuständen liegende Abtastwert a0 oder a3 ausgewählt, der dadurch nicht mehr vom Zeitabweichungswert td abhängig ist. Die Spitze des gebogenen Pfeiles gibt in den angegebenen vier Beispielen von Fig. 8 die jeweilige Referenz-Signalamplitude a0 oder a3 an.

Den vier speicherbaren Symbolzuständen Is, Qs entsprechen 16 mögliche Kombinationen. Davon sind entsprechend Fig. 7 vier als zuverlässig anzusehen. Die zusätzliche Einbeziehung der Kombinationen von Fig. 8 erhöht die Anzahl der zuverlässigen Kombinationen, auch wenn es gegebenenfalls Überschneidungen mit den in Fig. 7 angegebenen Kombinationen gibt.

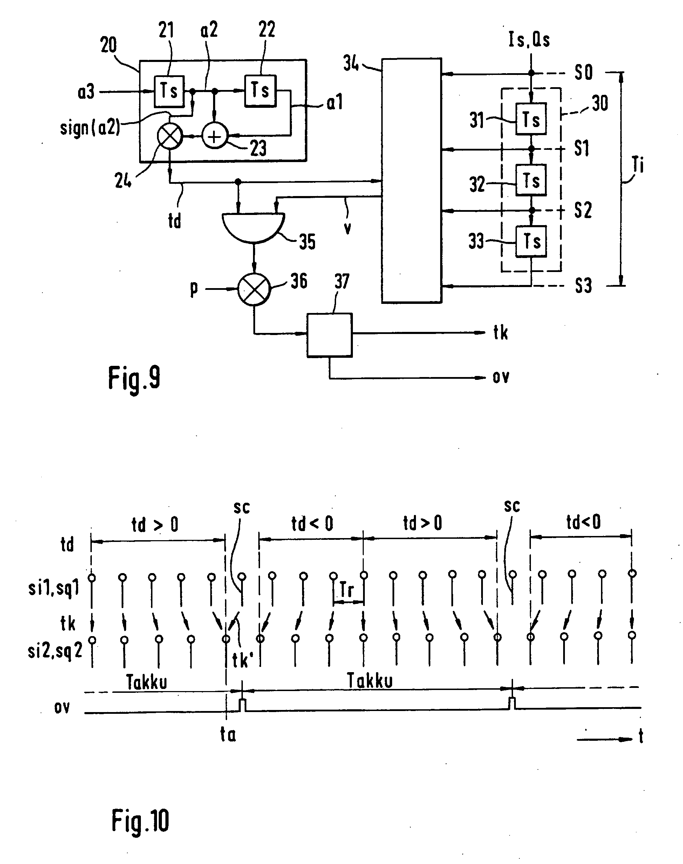

In Fig. 9 ist als Blockschaltbild ein Ausführungsbeispiel für eine Rechenschaltung 20 gemäß der angegebenen Gleichung (3) als Teil des Abweichungsdetektors 3 in Verbindung mit der Bewertungseinrichtung 11 dargestellt. Der Bewertungseinrichtung 11 sind die erkannten Symbolkomponenten Is bzw. Qs zugeführt. Der Rechenschaltung 20 sind die entsprechenden Quadraturkomponenten I oder Q als Signalamplituden a0 bis a3 am Eongang zugeführt. Den Eingang der Rechenschaltung 20 bildet eine Symbolverzögerungsstufe 21, die mit der jüngsten Signalamplitude a3 gespeist ist. Ihr Ausgang liefert die Signalamplitude a2, die einer zweiten Symbolverzögerungseinrichtung 22 und dem ersten Eingang eines Addierers 23 zugeführt ist. Der Ausgang der Verzögerungseinrichtung 22 liefert die Signalamplitude a1, die dem zweiten Eingang des Addierers 23 zugeführt ist. Am Ausgang der Verzögerungseinrichtung 21 wird das Vorzeichensignal sign(a2) abgegriffen und dem ersten Eingang eines Multiplizierers 24 zugeführt. Der zweite Eingang ist mit dem Ausgang des Addierers 23 gespeist. Das Ausgangssignal des Multiplizierers 24 liefert entsprechend der Gleichung (5) bis auf einen Skalierungsfaktor Ts/(2 x am) den gesuchten Zeitabweichungswert td. Wenn die Rechenschaltung 20 in doppelter Ausführung vorliegt, dann kann der Zeitabweichungswert aus beiden Quadraturkomponenten I, Q berechnet werden. Entsprechend muss dann der Zuverlässigkeitswert v auch aus den beiden Symbolkomponenten Is, Qs gebildet werden. Durch diese Maßnahme verdoppelt sich etwa die Anzahl der gültigen Zeitabweichungswerte td, wodurch die Regelung des Abtastregelkreises 1 noch gleichmäßiger wird.

Die Bewertungseinrichtung 11 enthält im einfachsten Fall eine Speichereinrichtung 30, die gleichzeitig vier aufeinanderfolgende Symbolkomponenten Is oder Qs zur Verfügung stellt, die den Symbolen S0 bis S3 entsprechen. Mittels drei hintereinandergeschalteten Symbolverzögerungseinrichtungen 31, 32, 33 wird diese Speicherung erreicht. Die vier Abgriffe der Speichereinrichtung 30 sind in einer Logikstufe 34 zugeführt, die in Verbindung mit dem Vorzeichen des Zeitabweichungswertes td eine logische Prüfung entsprechend Fig. 7 durchführt. Das Ausgangssignal der Logikstufe 34 ist der Zuverlässigkeitswert v, der eine Blockiereinrichtung 35 steuert, das im dargestellten Beispiel ein UND-Gatter für den Zeitverzögerungswert td und den Zuverlässigkeitswert v ist. Das Ausgangssignal der Blockiereinrichtung 35 wird mittels eines Multiplizierers 36 mit einem Zahlenwert p multipliziert, der als Regelschleifen-Verstärkungskoeffizient vorgegeben ist oder über eine nicht dargestellte Steuereinrichtung eingestellt werden kann. Der Ausgang dieses Multiplizierers 36 speist einen Akkumulator 37, der in der Regelschleife für den Zeitabweichungswert td als Integrierer dient. Der Ausgang des Akkumulators liefert einen Zeitkorrekturwert tk, der als Steuersignal dem Abtastinterpolator 4 zugeführt ist. Ein Überlaufsignal ov des Akkumulators 37 dient dazu, dass der Abtastinterpolator 4 beim Überlauf des Akkumulators 37 einen der realen Abtastwerte si1, sq1 überspringt. Dieses Überspringen wird anhand der Figur 10 verdeutlicht.

Fig. 10 zeigt schematisch im Zeitdiagramm reale Abtastwerte si1 bzw. sq1 nach dem Quadraturdemodulator 5. Die entsprechenden interpolierten Abtastwerte si2 bzw. sq2 am Ausgang des Abtastinterpolators 4 sind darunter dargestellt. Die realen Abtastzeitpunkte und die Interpolationszeitpunkte gleiten aneinander vorbei. Der jeweilige Zeitkorrekturwert tk ist als Pfeil dargestellt, der die Zeitdifferenz vom tatsächlichen Abtastwert zum interpolierten Abtastwert angibt. Ein erster Konflikt für die Interpolation kann dann auftreten, wenn in einer realen Abtastperiode Tr zwei Zeitkorrekturwerte tk anfallen. Dies kann jedoch verhindert werden, wenn sichergestellt ist, dass die der Bewertungseinrichtung zugeführte Datenrate, die sich in der Regel aus der Digitalisierungsrate ergibt, größer als die Interpolationsrate ist. Ein zweiter Konflikt kann auftreten, wenn ein interpolierter Abtastwert si2, sq2 zwei unterschiedlichen Zeitkorrekturwerten tk und tk' zugeordnet ist. Dies könnte in dem dargestellten Beispiel beim Zeitpunkt ta auftreten, bei dem der Zeitkorrekturwert tk etwa gleich groß wie der halbe Wert der Abtastperiode Tr ist. Spätestens ab diesem Abtastwert ta ist es sinnvoll, den Zeitkorrekturwert tk nicht weiter anwachsen zu lassen, sondern auf den benachbarten realen Abtastwert zu beziehen.

Durch einen Vergleich der beiden Zeitabweichungskorrekturwerte tk, tk' und eine Minimumsentscheidung kann der zweite Konflikt verhindert werden. Beide Konflikte lösen sich jedoch, wenn die Anzahl der interpolierten Abtastwerte si2, sq2 größer als die Anzahl der realen Abtastwerte si1, sq1 ist, weil dann durch ein Überlaufsignal ov des im Abweichungsdetektor 3 vorhandenen Akkumulators 37 ein Überspring- oder Auslassungsbefehl für einen realen Abtastwert si1, sq1 ausgelöst werden kann. In der letzten Zeile von Fig. 10 ist das Überlaufsignal ov des Akkumulators dargestellt. Nach jeder Akkumulatorperiode $T_{akku}$ wird der nächste reale Abtastwert sc übersprungen. Damit wird eine eindeutige Zuordnung zwischen den berechneten Zeitkorrekturwerten tk und den realen Abtastwerten si1, sq1 erreicht.

Es wird darauf hingewiesen, dass die beschreibenden Funktionen der Erfindung und ihrer Ausgestaltungen mittels einer monolithisch integrierbaren Schaltung realisierbar sind. Es ist dabei unerheblich, ob einzelne Funktionseinheiten als Schaltung oder mittels eines Programms in einem mitintegrierten Prozessor realisiert sind. Der erforderliche Rechenaufwand für die beschriebene Erfindung ist sehr gering, so dass ein bereits vorhandener Prozessor ohne weiteres mitverwendet werden kann.

**Patentansprüche**

**1.** Abtastregelkreis (1) für eine Empfangsschaltung (2) von mittels Quadraturmodulation digital übertragenen Signalen (s) mit einem Abweichungsdetektor (3) zum Bereitstellen von Zeitkorrekturwerten (t, k), welche einem in der Empfangsschaltung (2) nach einem Quadraturdemodulator (5) nachgeschalteten vorgesehenen Abtastinterpolator (4) zuführbar sind, wobei dem Abweichungsdetektor (3) eine Bewertungseinrichtung (11) vorgeschaltet ist, die aus einer Folge von Quadraturkomponentensignalen (Q, I) der Empfangsschaltung (2) einen Zuverlässigkeitswert (v) für die bereitgestellten Zeitkorrekturwerte ($t_d$) bestimmt, und der Abweichungsdetektor (3) blockiert wird, wenn der Zuverlässigkeitswert (v) eine vorgegebene Schwelle unterschreitet,
**dadurch gekennzeichnet, dass** die Bewertungseinrichtung so ausgebildet ist, dass sie die folgenden Schritte ausführt:

a) Bestimmung eines vorläufigen Zeitabweichungswertes aus einem Vorzeichenwechsel benachbarter Signalamplituden (a1, a2)

b) und Bestimmung der betragsmäßig größeren Amplitude der benachbarten Signalamplituden (a1, a2) als Referenz-Signalamplitude.

c) und, bei Feststellung eines Vorzeichenwechsels zwischen der Referenz-Signalamplitude und der anderen zu ihr benachbarten Signalamplitude (a0, a3) als der zur Bestimmung des vorläufigen Zeitabweichungswertes, den Abweichungsdetektor blockiert.

**2.** Abtastregelkreis (1) nach Anspruch 1,
**dadurch gekennzeichnet, dass**
die Bewertungseinrichtung (11) den Zuverlässigkeitswert (v) in Abhängigkeit von einer in einer Speichereinrichtung (30) gespeicherten Signalfolge (I, Q; Is, Qs; sr) der Empfangsschaltung (2) bestimmt.

**3.** Abtastregelkreis (1) nach einem der Ansprüche 1 oder 2,
**dadurch gekennzeichnet, dass**
der Zuverlässigkeitswert (v) nur dann den Zeitabweichungswert (td) für den Abtastregelkreis (1) freigibt, wenn der Zeitabweichungswert (td) einem vorgegebenen Vorzeichenwechsel der gespeicherten Signalfolge (I, Q; Is, Qs) zugeordnet ist.

**4.** Abtastregelkxeis (1) nach Anspruch 2,
**dadurch gekennzeichnet, dass**
der Zuverlässigkeitswert (v) nur dann den Zeitabweichungswert (td) für den Abtastregelkreis (1) freigibt, wenn der Signalzustand der gespeicherten Signalfolge (I, Q; Is, Qs) zwischen mindestens zwei Symbolabtastzeitpunkten (ts0 bis ts3) oder zugehörigen aktuellen Abtastzeitpunkten (tr0 bis tr3) keinen Vorzeichenwechsel aufweist.

**5.** Abtastregelkreis (1) nach einem der Ansprüche 1 bis 4,
**dadurch gekennzeichnet, dass**
mittels einer vom Zuverlässigkeitswert (v) abhängigen Blockiereinrichtung (35) die Übernahme des Zeitabweichungswertes (td) in den Abtastregelkreis (1) gesteuert wird.

**6.** Abtastregelkreis (1) nach einem der Ansprüche 1 bis 5,
**dadurch gekennzeichnet, dass**
ein vom Zeitabweichungswert (td) abhängiger Zeitkorrekturwert (tk) einer Modulo-Funktion entspricht, deren Funktionsbereich in positiver und negativer Richtung durch eine halbe Abtastperiode (Tr) begrenzt ist, wobei die Anzahl von interpolierten Abtastwerten (si2, sq2) und damit die Anzahl der berechneten Zeitkorrekturwerte (tk) in einem vorgegebenen Zeitintervall ($T_{Akku}$) kleiner ist als die Anzahl der Abtastwerte (si1, sq1) und in jedem Zeitintervall ($T_{Akku}$) mindestens ein realer Abtastwert (si1, sq1) bei der Zeitkorrektur übersprungen wird.

**Claims**

**1.** Sampling control loop (1) for a receiving circuit (2) for receiving signals (s) transmitted digitally by means of quadrature modulation, comprising a difference detector (3) for providing time correction values (t, k) which can be fed to a sampling interpolator (4) provided downstream of a quadrature demodulator (5) in the receiving circuit (2), wherein provided upstream of the difference detector (3) is an evaluation device (11) which determines, from a sequence of quadrature component signals (Q, I) from the receiving circuit (2), a reliability value (v) for the provided time correction values ($t_d$), and the difference detector (3) is blocked if the reliability value (v) is below a predefined threshold, **characterised in that** the evaluation device is designed such that it carries out the following steps:

a) determining a preliminary time difference value from a change in sign of adjacent signal amplitudes (a1, a2),
b) and determining the greater amplitude of the adjacent signal amplitudes (a1, a2) as the reference signal amplitude,
c) and, if a change in sign is ascertained between the reference signal amplitude and the signal amplitude (a0, a3) adjacent thereto other than the one used for determining the preliminary time difference value, blocks the difference detector.

**2.** Sampling control loop (1) according to claim 1, **characterised in that** the evaluation device (11) determines the reliability value (v) as a function of a signal sequence (I, Q; Is, Qs; sr) from the receiving circuit (2) which is stored in a memory device (30).

3. Sampling control loop (1) according to one of claims 1 or 2, **characterised in that** the reliability value (v) releases the time difference value (td) for the sampling control loop (1) only when the time difference value (td) is associated with a predefined change in sign of the stored signal sequence (I, Q; Is, Qs).

4. Sampling control loop (1) according to claim 2, **characterised in that** the reliability value (v) releases the time difference value (td) for the sampling control loop (1) only when the signal state of the stored signal sequence (I, Q; Is, Qs) exhibits no change in sign between at least two symbol sampling instants (ts0 to ts3) or associated current sampling instants (tr0 to tr3).

5. Sampling control loop (1) according to one of claims 1 to 4, **characterised in that** the transfer of the time difference value (td) into the sampling control loop (1) is controlled by means of a blocking device (35) which is dependent on the reliability value (v).

6. Sampling control loop (1) according to one of claims 1 to 5, **characterised in that** a time correction value (tk) dependent on the time difference value (td) corresponds to a modulo function, the functional range of which is limited in the positive and negative direction by a half sampling period (Tr), wherein the number of interpolated sample values (si1, sq2) and thus the number of calculated time correction values (tk) within a predefined time inte-rval $(T_{Akku})$ is less than the number of sample values (si1, sq1) and in each time interval $(T_{Akku})$ at least one real sample value (si1, sq1) is skipped during the time correction.

**Revendications**

1. Boucle de verrouillage d'échantillonnage (1) pour un circuit de réception (2) de signaux (s) à transmission numérique et modulation en quadrature à l'aide d'un détecteur d'écart (3) pour fournir des valeurs de correction de temps (t, k) fournies à un interpolateur d'échantillonnage (4) prévu après un modulateur en quadrature (5) dans un circuit de réception (2),

- le détecteur d'écart (3) étant précédé d'une installation d'exploitation (11) qui détermine une valeur de fiabilité (v) pour des valeurs de correction de temps $(t_d)$ fournies à partir d'une suite de signaux de composants en quadrature (Q, I) du circuit de réception (2), et
- le détecteur d'écart (3) est bloqué si la valeur de fiabilité (v) passe en dessous d'un seuil prédéfini,

**caractérisée en ce que**
l'installation d'exploitation est réalisée pour exécuter les étapes suivantes :

a) détermination d'un écart de temps provisoire à partir d'un changement de signe algébrique d'amplitude de signaux voisins (a1, a2), et
b) détermination de l'amplitude de la valeur la plus grande des amplitudes de signaux, voisines (a1, a2) comme amplitude du signal de référence, et
c) lorsqu'on constate un changement de signe algébrique entre les amplitudes de signal de référence et les autres amplitudes de signaux voisins (a0, a3) par rapport à la valeur de l'écart de temps provisoire à déterminer, on bloque le détecteur d'écart.

2. Boucle de verrouillage d'échantillonnage (1) selon la revendication 1,
**caractérisée en ce que**
l'installation d'exploitation (11) détermine la valeur de fiabilité (v) en fonction d'une suite de signaux (1, Q; Is, Qs; sr) du circuit de réception (2), signaux qui sont mémorisés dans une installation de mémoire (30).

3. Boucle de verrouillage d'échantillonnage (1) selon la revendication 1 ou 2,
**caractérisée en ce que**
la valeur de fiabilité (v) ne libère la valeur d'écart de temps (td) pour la boucle de verrouillage d'échantillonnage (1) que si la valeur d'écart de temps (td) est associée à un changement prédéfini de signe algébrique de la suite des signaux mémorisés (I, Q; Is, Qs).

4. Boucle de verrouillage d'échantillonnage (1) selon la revendication 2,

**caractérisée en ce que**
la valeur de fiabilité (v) ne libère la valeur d'écart de temps (td) pour la boucle de verrouillage d'échantillonnage (1) que si l'état de signal de la suite de signaux mémorisés (I, Q; Is, Qs) entre au moins deux instants d'échantillonnage symboliques (ts0-ts3) ou des instants d'échantillonnage (tr0-tr3) actuels, correspondants, ne présentent pas de variation de signe algébrique.

5. Boucle de verrouillage d'échantillonnage (1) selon les revendications 1 à 4,
   **caractérisée en ce qu'**
   on commande le transfert de la valeur d'écart de temps (td) dans la boucle de verrouillage d'échantillonnage (1) par une installation de blocage (35) dépendant de la valeur de fiabilité (v).

6. Boucle de verrouillage d'échantillonnage (1) selon les revendications 1 à 5,
   **caractérisée en ce qu'**
   une valeur de correction de temps (tk) dépendant de la valeur de l'écart de temps (td) correspond à une fonction Modulo, dont la plage fonctionnelle dans la direction positive et dans la direction négative est limitée par une demi-période d'échantillonnage (Tr),
   le nombre de valeurs d'échantillonnage interpolées (si2, sq2) et ainsi le nombre des valeurs de correction de temps (tk), calculées dans un intervalle de temps prédéfini ($T_{Akku}$) étant inférieur au nombre des valeurs d'échantillonnage (si1, sq1) et dans chaque intervalle de temps ($T_{Akku}$), on saute au moins une valeur d'échantillonnage réelle (si1, sq1) pour la correction de temps.

**Fig.1**

**Fig.2**

**Fig.3**

## Fig.4

## Fig.5

td > 0

$$a1 = am \cdot (-1 + \frac{2td}{Ts})$$

## Fig.6

td < 0

$$a2 = am \cdot (-1 + \frac{2td}{Ts})$$

$$f(td) = sign (a2) \cdot (a1 + a2)$$

$$= +1 \cdot \left\{ -am + am (-1 + \frac{2td}{Ts}) \right\}$$

$$= 2 \cdot am \cdot \frac{td}{Ts}$$

Fig.7

Fig.8

Fig.9

Fig.10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9611526 A
- WO 9617459 A
- US 5671257 A
- US 4759036 A

**In der Beschreibung aufgeführte Nicht-Patentliteratur**

- A BPSK/QPSK Timing-Error Detector for Sampled Receivers. **VON FLOYD M. GARDNER.** IEEE Transactions On Communications. vol. COM-34
- **TRÖNDLE et al.** Kompensation des systematischen Jitters bei der Taktgewinnung aus Digitalsignalen. *Frequenz,* September 1981, vol. 35 (9), 236-242